# EUROPEAN PATENT APPLICATION

(11) **EP 1 548 552 A1**
(43) Date of publication of application: **29.06.2005**
(21) Application number: 03258093.8
(22) Date of filing: 22.12.2003
(51) Int. Cl.: G06F 3/033

(54) **Display size mismatch management**

(71) Applicant: MATSUSHITA ELECTRIC INDUSTRIAL CO., LTD., Kadoma-shi, Osaka 571-8501 (JP)
(72) Inventor: Gordon, David George, Basingstoke, Hants RG24 8UW (GB)
(74) Representative: Dawson, Elizabeth Ann

(57) **Abstract**

In order to display a viewable area which, ideally, is larger than a physical display (eg. Mobile handset) without the need for scroll bars and the like, a portion of the display overlying an area being displayed is designated for triggering a displacement of the displayed area whereby a new part of the viewable area is displayed.

## Description

The present invention relates to a method in a data processing system for accessing large application display areas from a small physical display. The invention is particularly useful for a mobile communications handset.

### Introduction

Mobile handsets now allow download of applications, with fixed or variable display sizes. With many different handsets, with different fixed display sizes, it is inevitable that there will be a mismatch of display size between handset and application. In other words, the application would ideally, if it could, present information in a larger format than is available on the handset.

When a mismatch occurs, the problem of presenting the full application display area without loss of resolution arises. On a mobile handset, the screen size is very small, and shrinking the application display area to fit is very processor intensive (and hence unsuitable for a mobile, battery-powered device), and also leads to unacceptable loss of resolution. In addition, with a small display the addition of scroll bars will further unacceptably limit the visible screen area.

### Prior art

A mismatch between actual display area and ideal application display area is handled in a number of different ways by current well-known applications.

### Scroll bars

Many word processors, spreadsheets, etc, make use of scroll bars when the application display, or document, is too large to be fully shown on the physical display (handset, monitor etc.). The user can traverse to the undisplayed parts of the target document by clicking on arrows at the ends of scroll bars to move up and down, left and right within the application. Usually the user can also "grab" the scroll bar slider using a mouse "click-and-hold" or a stylus touch, and drag it along the scroll bar to move through the document. Lastly, the user can tap areas of the scroll bars to achieve page-by-page movement.

On a small screen of, say 320 x 240 pixels, presenting a scroll bar with arrow buttons large enough to be seen and clicked on, would remove a large proportion of the usable screen from displaying the document itself.

### Adobe Acrobat

Adobe Acrobat presents a hand icon as the cursor. When the user "click-and-holds", this cursor is effectively fixed to the document, and any movement of the cursor will move the document appropriately. Scroll bars are also presented. This method requires a separate "click-and-hold" action for each page scrolled up.

In a stylus-based system, movement of the document within the physical display is made by touching the screen with the pointer and sliding it across the screen. Touching the screen "fixes" that point of the document to the pointer, and sliding the pointer across the screen moves that point in the document with the pointer, and the rest of the document moves with it. This technique requires the pointer to be placed - dragged - lifted - replaced continuously to make large movements, which is rather awkward.

### Shrink the display

The application display area is scaled to fit the handset display. An application with a display of, say 640 x 480 pixels (such as that presented by applications on a low resolution computer screen), must be shrunk in each dimension by ½ to fit on a typical PDA display of 320 x 240 pixels, so that the area presented is ¼ the size. This leads to great loss of resolution, and some intensive computation to do this scaling. Both of these may be unacceptable in a mobile device.

### Stylus systems

Current systems using a stylus and touch screen, such as Palm Pilots, iPAQs, etc, allow the stylus to select an item by touching particular points on the screen. Only limited drag capability is provided by some applications. Movement within large files, such as in a word processor, is provided by scroll bars.

### Summary of invention

In the present invention, a portion of a viewable area (e.g. spread sheet, map, picture, photograph) being part of an application is displayed preferably so as to occupy the whole of a visual display. At least one area of the visual display is designated to trigger a displacement of the displayed area relative to the whole viewable area whereby a different portion of the viewable area is displayed. When an operation is detected in the designated area relating to a pointing device the displacement then takes place. The "operation" could simply be movement of the pointer to the designated area, or a confirmatory action might be required, such as a click of a mouse or a "tap" of an external stylus.

The designated area may be indicated by an icon overlying the displayed data, and there may be several areas, optionally with icons, for different displacement directions.

The displacement may be incremental or apparently continuous. The displacement may continue until the pointer is moved out of the designated area, or one fixed displacement may occur each time the pointer operation occurs in the designated area.

The designated area is preferably in an edge region of the display. The displacement may be larger/faster the closer is the pointer to the edge itself.

The predetermined area(s) may be designated according to the relative "areas" of the whole viewable area and the portion being displayed, so that if the displayed data is incomplete in one dimension/direction only, only displacement in that dimension/direction is possible.

An embodiment of the invention will now be described by way of example only and with reference to the accompanying drawings in which:
Figure 1 is a schematic diagram of the basic components of a mobile handset which would be used to carry out the invention;
Figure 2 illustrates a possible mismatch between acceptable handset display area and ideal application display area;
Figure 3 shows the displayed area being displaced within the available data for display;
Figure 4 illustrates one embodiment of the invention, with eight predetermined areas each having a different associated displacement direction;
Figure 5 illustrates a possible scenario when the edge region of the viewable area is displayed, at which stage no further displacement towards that edge is possible;
Figure 6 illustrates the possibility of icons being associated with each area; and
Figure 7 is a flowchart summarising an algorithm for use in carrying out the invention.

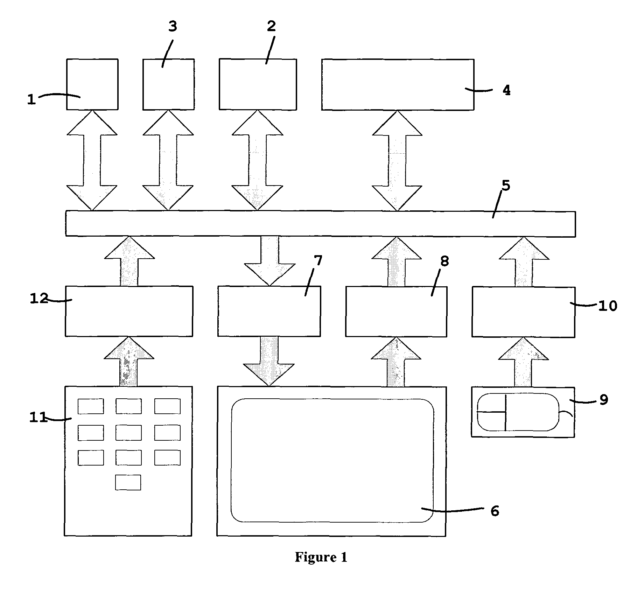

The invention described here operates in a computer system containing at least the components illustrated in Figure 1.

Referring to the figure, the following system components are shown:
1. CPU. The CPU executes the program contained in associated program storage, and implements the algorithms described below.
2. Program Storage. The program storage component may be composed of one of more of a number of different component types. The alternative different types include, but are not limited to, disk drive sub-systems and flash memory or other non-volatile memory components. In some systems where the program storage component is semiconductor memory such as flash memory, the program may execute directly out of this component.
3. RAM. This memory component is almost invariably semiconductor memory components, and is used to hold data variables used in various computational tasks including the algorithms described below. In some systems it may also hold the executing program, copied from the program storage component.
4. Communications and radio sub-system. This component is a simplification of all the communications mechanisms present in a mobile device which may operate alongside the method of the invention.
5. System bus. The system bus provides a mechanism to allow the system components to pass information between each other, under the control of the CPU and its software.
6. Touch sensitive screen. The screen is typically a Liquid Crystal Display containing a pressure-sensitive overlay to allow the position of any object touching the screen to be determined. The overlay is usually used in conjunction with a pointing device such as a stylus, though a pen or pencil (or even a nail or toothpick), can be used. In the method to be described below, this component detects stylus-based trigger events.
7. Display control logic. The display control logic converts commands and data from the CPU 1, communicated via the system bus 5, into the particular signals required to turn on or off pixels on the display 6, and to set the colour of the pixels. It may also incorporate a dedicated graphics drawing sub-system to simplify and reduce the processing needed by the CPU 1. Display control logic 10 redraws the image presented on the handset screen as needed, under the control of the CPU and its program. It is the display control logic combined with software functions executed by the CPU which would usually detect a mismatch between the size of an image sent to the display for viewing and the physical/actual display size.
8. Touch screen control logic. This system component converts pressure detection information from the pressure-sensitive display overlay on the display into co-ordinates that can be understood by the CPU 1, and allows the CPU to read them via the system bus 5. This information tells the CPU where a stylus (or pencil or nail!) has been touched on the screen.
9. Mouse. This system component is immediately familiar to computer users. It is held in the hand of the computer user, rests on a flat surface and can be moved over the flat surface by the user. In its simplest embodiment this movement is detected by the use of a ball on the underside in contact with rollers whose rotations cause light beams to be interrupted. The interrupted light beams are converted into electrical signals and communicated to Mouse Control Logic. Alternatively in a more sophisticated embodiment the ball and rollers may be replaced by a light beam which reflects off the sensors in the mouse which are used to determine movement. The mouse also typically has a number of buttons which are accessible to the user and which are manipulated in a variety of ways to produce a variety of different actions.
   An alternative implementation to a mouse is a touch pad, which is a separate touch-sensitive area not connected to the screen. This works differently to the touch-sensitive screen in that it allows the user to slide a pointing device (or more usually a fingertip) over its surface and communicates the movement rather than the position to the CPU so that the movement can be reflected in the movement of the cursor icon.
   Another implementation is known as a tracker-ball. This is similar to a roller-ball mouse except that the ball is positioned on top and is directly manipulated by the hand of the user to produce electrical signals via rollers as already described.
   Another implementation uses a stylus on a separate flat surface, connected to the main system by a wired or wireless connection. The stylus is moved over the flat surface and its movement is reflected in the movement of the cursor on the screen.
10. Mouse control logic. The converts the movement signals from the mouse 9 into different movement signals that can be understood by the CPU 1 communicated via the system bus 5. The CPU 1 will typically convert these signals into the movement of a cursor icon displayed on the screen 6. The overall effect is that when the mouse is moved in a particular direction, the cursor icon also moves in the same direction.

The mouse and mouse control logic are typically only found on desktop or laptop computing systems. The touch sensitive screen with stylus is normally offered as an alternative to the mouse in a mobile or handheld system. It is unusual, though not unknown, to find a mouse AND a touch sensitive screen in the same system.

Figure 1 also shows keypad 11 and keypad control logic 12 which are typically present in a mobile telephone but are not directly involved in the present invention.

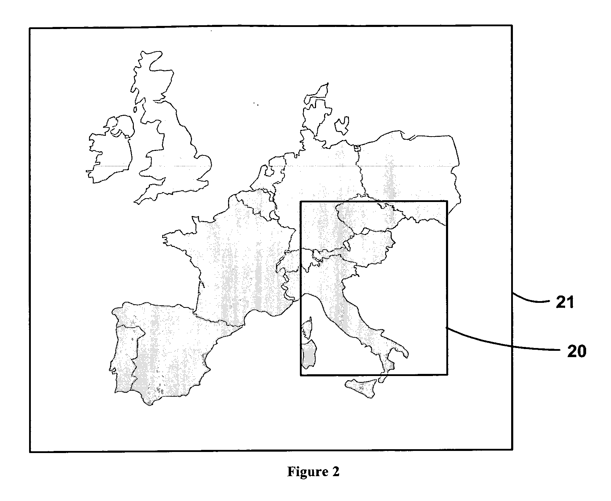

Using the method to be described below, a mismatch between screen size and ideal application display size for displaying an entire viewable area can be accommodated with no loss of resolution, by effectively treating the handset display as a window 20 into the larger available area 21, as shown in Figure 2.

In the situation of Figure 2 an application running in a data processing system, such as on a mobile handset is presenting a map of Europe. The handset is only displaying the area within the smaller rectangle, as a window 20 into the larger map.

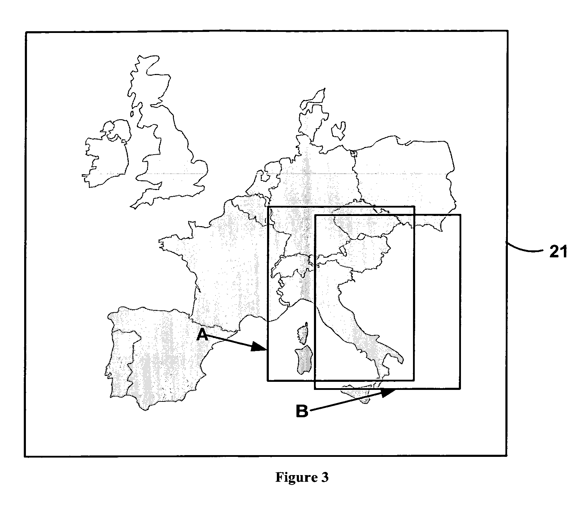

In this invention, this window 20 is moved around within the application area based on a combination of cursor position and mouse button actions in a mouse-based system, or on stylus "tap" or "slide" actions in a stylus + touch screen system. This is illustrated in Figure 3, where the handset display starts in position A.

If one of the conditions required to cause movement occurs, the apparent position of the handset display within the application data moves. In the figure it is shown moving to position B, displaying to the user a different part of the application data (map).

Examples of applications that would benefit from a display system like this would be:
- A large spreadsheet presented in a PDA-size screen.
- A large web page presented on a limited size screen.
- Games with large "maps" and real-time movement within that map, played on a PDA.

The size mismatch between handset and application may only be in one dimension. The following rules describe how this is dealt with.
- If the ideal application display area is larger than the handset display size in either or both dimensions, the pointer allows the user to move the handset display around within the application display area.
- If the ideal application display area is larger in one dimension but smaller in the other, movement is allowed in the mismatched dimension only.
- If the ideal application display area fits inside the handset display area, either exactly or with room to spare, then obviously the entire application display area is presented to the user with no possibility for movement.

There are a number of combinations of movement system, movement modes and movement trigger action, within the scope of the invention.

### Movement system

Two movement systems are proposed, described here. The first is characterised by having areas of the screen where various actions of the cursor can cause movement. The second uses icons positioned on the display in the centre of these areas.

### Display trigger area

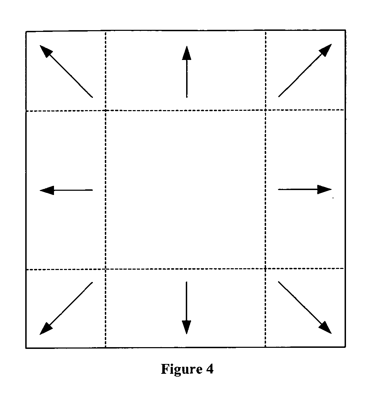

In the first system, trigger areas at the outside edges of the handset display are identified which cause movement in the specified direction. These areas are shown in Figure 4.

In general terms, the user moves a pointing device across the screen. As the pointer nears an edge of the screen (how near is a subject for experimentation and implementation, but a suitable example might be ¼ screen width or height), the handset display area then begins to "pan" across (or up/down) the application area in the direction of the side (or top/bottom) of the screen that the pointer is at, just like a camera panning across a landscape. The movement continues while the pointer is within (say) ¼ screen width (or height) of the edge, and ceases when the pointer is moved back towards the centre of the screen.

A potential refinement of this method is to make the movement accelerate as the pointer is moved nearer the edge than ¼ screen width (or height), and decelerate as the pointer is moved away from the edge or the handset display approaches the edge of the available data.

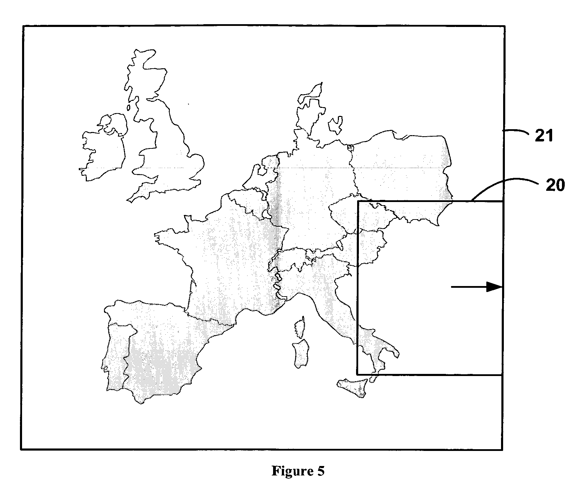

Movement ceases when the handset display area reaches the edge of the application area, as shown in figure 5. Keeping the pointer on the right hand edge will not produce further movement. An audio or visual alert to this fact may be presented to the user. In another embodiment, as the edge of the application area is approached, the rate of movement may be decreased if desired.

At the comers, which are effectively within two trigger areas, the movement prescribed by both areas occurs, i.e. diagonally.

### Movement icons

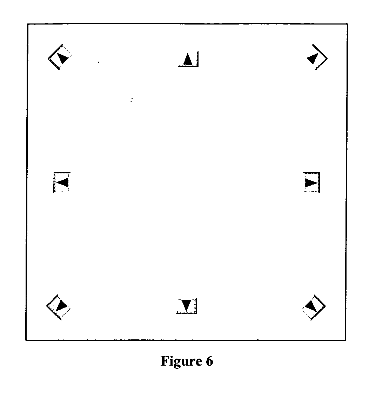

In the second system, movement icons are presented at the edges and comers of the handset display area overlaying the application display area, and these icons are used to cause movement in the specified direction in a similar fashion to the trigger areas described above. The movement icons replace the "trigger areas" discussed above and are, in effect, smaller "trigger areas" within the previously described "trigger areas". This is illustrated in Figure 6.

### Movement modes

Once movement has been triggered, it can occur in a number of different ways. Some are appropriate in certain circumstances, other ways in other circumstances, and in some situations, two or more methods may be appropriate (though only one should normally be selected in any implementation).

It should be noted that, although the handset display apparently moves within the available application display area in a particular direction, the actual movement is of the contents of the handset display in the exactly opposite direction, with presented display information being discarded as it drops off the edge opposite the pointer, and new display information being presented at the edge where the pointer is.

### Continuous smooth movement

If this movement mode is used, the handset display starts moving across the application display area smoothly, with small increments made using a short time interval. The effect is of a movie camera panning across a scene.

### Single fixed displacement

If this movement mode is used, the handset display moves once across the available application display area, for a fixed increment. The movement may be instantaneous, or may be made over a short time period.

The increment moved would typically be less than ½ handset screen width, to ensure the display can always be stopped in a useful position. Otherwise the part of the display the user may wish to manipulate may be in one edge movement area before the move, and in the opposite edge movement area after the move, making it difficult to position the desired part in the middle of the handset display.

### Continuous fixed displacement

If this movement mode is used, the handset display executed a series of single fixed displacements, each separated by a relatively long period of time compared to the time taken for one movement to complete. The time chosen would allow the user to have a snapshot of the display, to allow a decision to be made on whether to stop the movement or not. An example would be one movement every ½ second.

If the movement trigger is maintained by the user beyond a predetermined number of displacements, the time separation between each displacement may be shortened to speed up the movement to allow rapid traversal of larger displacements.

### Movement triggers

In each system, movement is triggered by one of a number of actions concerning mouse cursor position, mouse button "single-click", mouse button "click-and-hold", stylus "tap" and stylus "slide" (where the stylus is touched to the screen and moved across the screen while maintaining contact, similar to drag-and-drop in a mouse system). The movement triggered may be continuous and smooth in response to an ongoing trigger, or may be a single movement of a fixed amount in response to an ongoing trigger, as appropriate to the system and the cursor/stylus action.

If movement is occurring in a particular direction, and a new trigger occurs to cause movement in a different direction before the first movement is explicitly stopped, the movement continues in the new direction. For example, if the cursor is in an edge-trigger area and is slid to a comer trigger area, the movement changes appropriately to respond to the new trigger.

### Movement triggered by Display Trigger Area

In a mouse based system, the cursor moves on screen in response to movements of the mouse. In this embodiment of the invention and as described above, the part of the application display area presented on the handset display changes in response to certain cursor actions in an area in proximity to one or more edges of the handset display screen, as if the handset display were moving across the available application display area. The movement may be continuous or a single movement. If the movement is continuous then it continues until the condition triggering the movement is removed or ended, or until the handset display reaches the edge of the application display area.

In a stylus + touch screen system as the stylus is tapped in an area on proximity to an edge of the handset display screen, the display moves in a similar way to the mouse system. Movement continues until the stylus is tapped on the screen outside of any trigger area.

Alternatively the stylus may already be in contact with the touch screen, and is moved to one of the trigger areas at the edge of the display to start movement. Movement is stopped by lifting the stylus, moving the stylus outside of all trigger areas, or by the handset display reaching the edge of the available area.

### Movement triggered by mouse cursor position

If the mouse cursor is moved into one of the edge trigger areas, continuous movement of the display starts and continues until the mouse cursor is moved out of all trigger areas or the handset display reaches an edge of the available area. Movement of the cursor from one trigger area to another causes the direction of movement to change to reflect the new position.

It is important to note that in this embodiment the movement of the handset display does not depend on the movement of the pointer, but rather on its position.

Movement of the handset by a fixed displacement is also possible here, either as a single movement or by executing a continuous series of jumps separated by a short pause each time. However, it is anticipated that this mode of movement with this trigger will be very jerky, and not at all user-friendly.

The speed of movement could be increased either based on the nearness to the edge, or by the length of time the mouse cursor remains in a movement area.

### Movement triggered by a mouse single-click

In this situation, the mouse cursor is moved into one of the edge trigger areas but no movement occurs due to that. Movement starts when a mouse button is single-clicked while the cursor is still within an edge trigger area. Movement may be continuous or alternatively it may be a single fixed displacement or a series of single fixed displacements every (say) ½ second.

Continuous movement is stopped by a mouse single-click in the central area, or when the handset display reaches the edge of the available application display area.

### Movement triggered by mouse click-and-hold

In this situation, the mouse cursor is moved to an edge trigger area and then a mouse button is clicked and held, starting movement. Movement may be continuous or alternatively it may be a single fixed displacement or a series of single fixed displacements every (say) ½ second if the mouse button continues to be held.

Continuous movement or periodic fixed displacement movement is halted if the mouse button is released, of the mouse cursor is moved out of all edge trigger areas of if the handset display reaches the edge of the available area.

The speed of movement could be increased either based on the nearness to the edge of the cursor, or by the length of time the mouse button is held.

### Movement triggered by stylus "tap" on a touch screen

In this situation, movement starts when the stylus is touched to the touch screen in a trigger area, and then lifted. As in all cases, the direction is determined by which area is tapped, and the movement style may be continuous movement or a single fixed displacement.

It is possible that movement may be a series of fixed displacements, but this may be less user-friendly and therefore less useful.

Continuous movement stops if the stylus is tapped anywhere outside all the trigger areas, or if the handset display reaches the edge of the available area.

### Movement triggered by stylus "tap and hold" on a touch screen

In this situation, the stylus is touched to the touch screen in a trigger area, but is then held in contact with the screen rather than lifted. Movement, either continuous or repeated fixed displacement, occurs while the stylus touches the trigger area, and ceases if the stylus is lifted, if the stylus is moved out of any trigger area, or if the handset display reaches the edge of the available area.

A useful enhancement to the repeated fixed movement situation would be to shorten the time between each individual move the longer the stylus is held on the touch screen.

### Movement triggered by stylus "slide" on a touch screen

In this situation, the stylus is touched to the touch screen outside of any trigger area, and is then dragged into a trigger are without losing contact with the screen. This starts either continuous movement or repeated single shifts.

Movement continues until the stylus is lifted off the screen or is slid out of any trigger area.

The direction changes if the stylus is slid to a different trigger area.

A useful enhancement to the situation would be to shorten the time between each individual move or speed up the continuous movement the nearer the stylus is to the edge of the handset screen.

### Icon system

As noted above, an icon can be regarded as a smaller "trigger area" in which case all of the foregoing options are possible. However, in preferred icon systems merely positioning the mouse cursor over a movement icon will cause no action.

### Mouse click on an icon

A single fixed displacement seems most appropriate for a single-click trigger in an icon-based movement system, though any movement mode is possible.

If continuous movement is used as the movement mode, the movement is in the direction of the last icon that was single-clicked, and ceases when the mouse cursor is single-clicked anywhere except on a movement icon.

### Mouse button click-and-hold on an icon

Continuous smooth movement would seem most appropriate for this trigger, though again any movement mode is possible. The mouse button is released or the cursor moved off the icon to stop movement.

### Stylus taps on the icon

In a stylus-based system, the stylus can be tapped on any movement icon to cause movement in that direction. The movement mode can be a single fixed amount or continuous smooth movement.

The direction changes if a different movement icon is tapped.

Movement ceases if the stylus is tapped anywhere except on a movement icon, or if the handset display reaches the edge of the available area.

### Algorithms

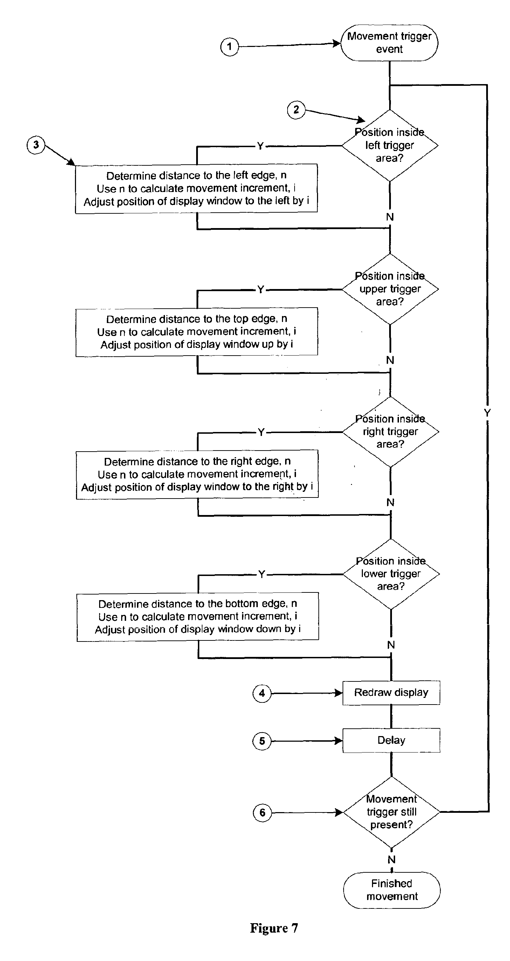

An algorithm that governs displacement of the display based on the trigger event is described below with reference to figure 7.

The procedure of Figure 7 is invoked when a movement trigger occurs at step 101. It applies a displacement to the visible display based on the position of the movement trigger. For example, of the movement trigger occurred in the trigger area on the left hand side of the screen (102), the distance of the trigger event from the adjacent screen edge is determined and the amount of movement to be applied to the picture in the display is calculated from that (103). The calculation used may use a linear or logarithmic relationship between the distance from the edge and the displacement applied.

The algorithm is simplified by making use of the fact that, if the trigger event is in the left hand trigger area, it cannot also be in the right hand trigger area at the same time. A similar assumption is made for the top and bottom trigger areas. If the trigger event is in a side area and is also in either top or bottom trigger area (i.e. it is in one of the comers), the displacement is a vector summation of the lateral and up/down displacements.

Once the displacement in each direction has been determined, it is applied to the picture being displayed (103), the screen is redrawn (104) and the algorithm pauses for a pre-determined time (105). After this pause, the algorithm checks to see if the trigger event is still occurring (106) and, if it is, repeats the whole thing.

The advantages of this system are:
- An application with an unspecified ideal display size can be downloaded to and run on a handset with any display area or shape, and the display size mismatch is handled in a clean, intuitive and easy to use way without requiring any changes to the application.
- An application can be ported to any handset supporting this mechanism in a clean, intuitive and easy to use way.

The display area system has the following additional advantages:
- Screen area is not wasted by scroll bars; the entire display is available to show application data.
- It is quick and easy to use, without requiring accurate placement of the pointer on a scroll bar button.

## Claims

1. A method in a data processing system for displaying information, wherein said data processing system includes a visual display, an operating system and means for determining the position of a pointing device within the area of the display, the method comprising:
displaying a portion of a viewable area being part of an application running in the system,
designating at least one predetermined area of the visual display, overlying said displayed portion in use, to trigger a displacement of the displayed area relative to the whole viewable area whereby a different portion is displayed;
detecting an operation relating to the pointing device in said predetermined area and displacing the viewable area in response to the detection to visibly display a new portion of the viewable area.

2. A method as claimed in claim 1 in which the pointing device is a cursor, moveable within the display under the control of a manually operable device associated with the display.

3. A method as claimed in claim 1 in which the display has an associated screen which is sensitive to contact by an external pointing device.

4. A method as claimed in claim 1, 2 or 3 in which the or each predetermined area is indicated by an icon overlying the displayed portion of the viewable area.

5. A method as claimed in claim 4 in which the icon or icons indicate the displacement direction.

6. A method as claimed in any preceding claim in which two or more areas are designated each triggering a different direction of displacement.

7. A method as claimed in claim 6 in which the predetermined areas are designated according to the relative areas of the whole viewable area and the portion being displayed, whereby if the displayed data is incomplete in one dimension only, only displacement in that dimension is possible.

8. A method as claimed in any preceding claim in which the predetermined area(s) is/are in edge regions of the display.

9. A method as claimed in claim 8 for use with a generally square or rectangular display including predetermined areas in comer regions of the display for triggering diagonal displacement.

10. A method as claimed in claim 8 or 9 in which the displacement continues for as long as the pointing device remains in a predetermined area.

11. A method as claimed in claim 8, 9 or 19 in which, within the edge region(s) the apparent displacement speed or amount is variable according to the proximity of the pointing device to the edge of the display.

12. A method as claimed in any preceding claim in which the displacement is incremental.

13. A method as claimed in claim 12 in which the increments of movement are so small as to appear continuous to the user.

14. A method as claimed in any preceding claim in which the operation relating to the pointing device is the movement of the pointing device to said predetermined area.

15. A method as claimed in any of claims 1 to 13 in which the operation relating to the pointing device is a combination of the movement of the pointing device to said predetermined area and an additional displacement confirmation operation.

16. A portable electronic device having a data processing system including a display, an operating system and means for determining the position of a pointing device, said portable electronic device having means for carrying out the method of any preceding claim.
